Europäisches Patentamt

(19) European Patent Office

Office européen des brevets

(11) Veröffentlichungsnummer: **0 024 004**

**A1**

(12) **EUROPÄISCHE PATENTANMELDUNG**

(21) Anmeldenummer: 80104443.9

(22) Anmeldetag: 28.07.80

(51) Int. Cl.³: **H 02 K 15/06**

(30) Priorität: 09.08.79 DE 2932356

(43) Veröffentlichungstag der Anmeldung:
18.02.81 Patentblatt 81/7

(84) Benannte Vertragsstaaten:
DE FR GB IT

(71) Anmelder: SIEMENS AKTIENGESELLSCHAFT Berlin
und München
Postfach 22 02 61
D-8000 München 22(DE)

(72) Erfinder: Eger, Leonhard
Paumgartner Strasse 24
D-8500 Nürnberg(DE)

(72) Erfinder: Engelmann, Horst
Strassburger Strasse 11
D-8500 Nürnberg(DE)

(54) Einziehnadel.

(57) Beim Einziehen von mehrlagigen, z.B. zweilagigen Spulen in die Ständerblechpakete von Elektromotoren werden pro Nut zwei Lagen eingeführt. Die zweite Lage wird durch Deckschieber gegen Herausquellen aus der Nut abgesichert. Um genügend Spielraum zum Einführen des Deckschiebers zu haben, muß die erste Lage bereits genügend komprimiert werden. Durch die erfindungsgemäße Ausbildung der Einziehnadel mit dem keilförmigen Druckstück wird beim Einziehen der zweiten Spulenlage in einem Arbeitsgang sowohl die erste Lage komprimiert als auch die zweite Lage eingezogen.

FIG 3

EP 0 024 004 A1

SIEMENS AKTIENGESELLSCHAFT      Unser Zeichen
Berlin und München              VPA 79 P 7 5 3 7 EUR


Einziehnadel

Die Erfindung bezieht sich auf eine Einziehnadel zum
Einziehen mehrlagiger Spulen in die Nuten von Ständerblechpaketen von Elektromotoren.

Bekanntlich werden beim Einziehen mehrlagiger Spulen
mittels Einziehnadeln, z.B. zweilagiger Spulen, in die
Ständerblechpakete von Elektromotoren pro Nut zwei Lagen eingeführt. Die zweite Lage wird durch Deckschieber
gegen das Herausquellen aus der Nut abgesichert. Um genügend Spielraum zum Einführen des Deckschiebers zu
haben, muß die erste Lage bereits genügend komprimiert
werden. Bisher wurden mittels Hammerschlägen auf einen
zur Nutführung ausgesparten Flachstab die ersten Lagen
komprimiert. Beim mechanischen Eindrücken von Spulen
bedeutet das Komprimieren der ersten Lage einen zeitraubenden Zwischenschritt.

Wb 2 Dm / 30.7.1979

Der Erfindung liegt daher die Aufgabe zugrunde, die bekannte Einziehnadel dahingehend zu verbessern, daß das zeitraubende zusätzliche Komprimieren der ersten Lage entfällt.

Diese Aufgabe wird gemäß der Erfindung dadurch gelöst, daß an der Einziehnadel ein keilförmiges Druckstück vorgesehen ist. Die Ausbildung des Druckstücks ist so bemessen, daß eine allmähliche Verdichtung infolge der Keilform eine Verletzung der Drähte verhindert.

Der technische Vorteil der erfindungsgemäßen Einziehnadel besteht darin, daß, beim Einziehen der zweiten Spulenlage, in einem Arbeitsgang sowohl die erste Lage komprimiert als auch die zweite Lage eingezogen wird.

Anhand der Zeichnung und eines Ausführungsbeispiels wird die Erfindung näher beschrieben. Es zeigt:

Fig. 1    eine Nut gefüllt mit erster Lage und Zwischenschieber,

Fig. 2    eine Einziehnadel mit Druckstück gemäß der Erfindung,

Fig. 3    den Verdichtungs- und Einziehvorgang mit der erfindungsgemäßen Einziehnadel.

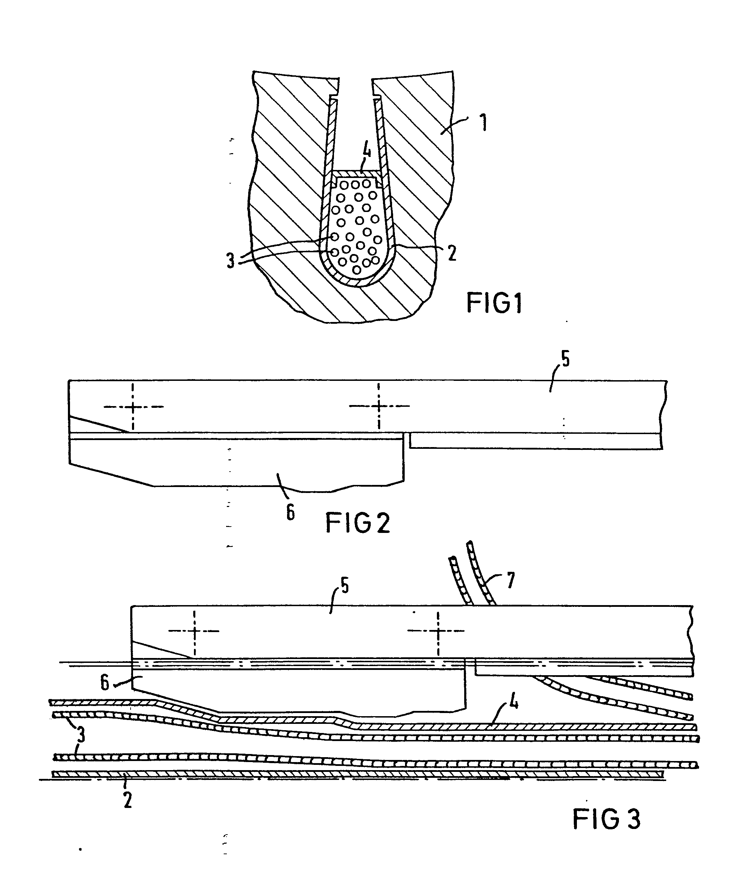

In Fig. 1 ist eine mit einer ersten Lage gefüllte Nut und dem Zwischenschieber dargestellt. Mit 1 ist die Nutform, mit 2 der Nutenkasten, mit 3 die erste Lage und mit 4 der Zwischenschieber bezeichnet. Der Zwischenschieber 4 verhindert das Herausquellen der ersten Lage aus der Nut.

In Fig. 2 ist schematisch die Einziehnadel gemäß der Erfindung dargestellt. Die Einziehnadel 5 besteht z.B. aus Federstahl und ist mit dem keilförmigen Druckstück 6, z.B. aus einem hochlegierten Stahl, entsprechender Härtung, versehen. Das Druckstück 6 ist an der Einziehnadel 5 derart angebracht, daß jeweils beim Einziehen einer
weiteren Spulenlage die darunterliegende Lage komprimiert wird.

In Fig. 3 ist in schematischer Darstellung der Verdichtungsvorgang bzw. der Einziehvorgang gezeigt. Im Nutenkasten 2 befindet sich die erste Lage 3. Mit der Einziehnadel 5 wird die zweite Lage 7 eingezogen und
mittels des Druckstücks 6 gleichzeitig die erste Lage 3
komprimiert und der Zwischenschieber 4 auf die erste
Lage aufgepreßt. Das Einziehen der zweiten Lage und das
Komprimieren der ersten Lage und das Anpressen des Zwischenschiebers 4 an die erste Lage wird in einem Arbeitsgang durchgeführt.

2 Patentansprüche
3 Figuren

Patentansprüche

1. Einziehnadel zum Einziehen mehrlagiger Spulen in die Nuten von Ständerblechpaketen von Elektromotoren, d a d u r c h   g e k e n n z e i c h n e t , daß an der Einziehnadel (5) ein keilförmiges Druckstück (6) vorgesehen ist.

2. Einziehnadel nach Anspruch 1, d a d u r c h   g e - k e n n z e i c h n e t , daß die Einziehnadel (5) aus Federstahl und das Druckstück (6) aus hochlegiertem Stahl bestehen.

FIG1

FIG 2

FIG 3

# 0024004

Nummer der Anmeldung
EP 80 10 4443

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 763 729 (GEC)  <br> * Seite 12, Absatz 2 bis Seite 18, unten; Figuren 4-8 * <br> -- | 1,2 |
| X | US - A - 3 672 039 (GEC) <br> * Spalte 10, Zeile 22 bis Spalte 11, Zeile 16; Figuren 13-17 * <br> -- | 1 |
|  | DE - A - 1 763 458 (INDUSTRA) <br> * Seite 7, Absatz 3 bis Seite 10, Absatz 1 * <br> -- | 1 |
| A | FR - A - 2 222 785 (VEB ELEKTROMAT) | |
| A | FR - A - 2 358 045 (RIST) | |
| A | US - A - 3 507 029 (STUCKEY) | |
| A | DE - C - 747 968 (MICHELSEN) <br> ---- | |

**KLASSIFIKATION DER ANMELDUNG (Int. Cl.³)**

H 02 K 15/06

**RECHERCHIERTE SACHGEBIETE (Int. Cl.³)**

H 02 K 15/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-11-1980 | STEINMETZ |

EPA form 1503.1   06.78